# EUROPEAN PATENT APPLICATION

(11) **EP 1 256 905 A1**
(43) Date of publication of application: **13.11.2002**
(21) Application number: 01110974.1
(22) Date of filing: 07.05.2001
(51) Int. Cl.: G06N 3/067

(54) **Transition unit providing an optical output signal**

(71) Applicant: Abscondenda AB, 417 64 Göteborg (SE)
(72) Inventor: Kinnander, Per, 115 53 Stockholm (SE)
(74) Representative: Lindberg, Klas Valter Bo

(57) **Abstract**

The present invention relates to a transition unit providing a transition between an electrical or optical input signal to an optical output signal. The invention also relates to some applications of such a transition.

The transition unit comprises a chip with an integrated array of cells, wherein each cell comprises: an input for receiving a first signal; processing means for processing of the received signal; and an optical output for outputting the processed, second signal as an optical signal.

According to further aspects of the invention, it also relates to an optical storage device, an image receiving device, a camera for image registration and an optical computer, all comprising a transition unit as discussed above.

## Description

### Field of the invention

The present invention relates to a transition unit providing a transition between an electrical or optical input signal to an optical output signal. The invention also relates to some applications of such a transition unit.

### Background of the invention

In recent years there has been a development towards chips with a cellular structure, whereby a parallel processing of input data could be performed. Specifically, this is possible with so called cellular neural networks (CNN), which are known from e.g. US 5140670 and US 5355528. However, such cellular structure has hitherto only been used to a very limited extent, since in most applications it is difficult to provide separated data to be processed in parallel in an efficient manner, and to use the separately processed data. Hereby, the range of possible application areas for the CNN technology is limited.

Further, it has also been a development towards optical memories. However, a problem with such optical memories is the required transition between an input data signal to be stored, which is frequently electrical, and the required optical input signal to be used by the optical memory. For example a spatial light modulator (SLM) could be used for such a transition, which is then illuminated by a laser, whereby the transmitted or reflected light is projected towards the optical device. However, the known transition devices suffer from low throughput and relatively long transfer times. Further, there is a great risk of errors, since the signal must first be processed and then be fed to the light modulator. Further, it is difficult to address the optical memories correctly, both in read and write operations.

Accordingly, it is a common problem for many different parallel optical devices, such as optical memories and optical computers, that the input and output must be performed in a serial data stream making the processes time consuming and inefficient. With optical computer is in this application meant that optical computing consists of all methods for intentionally manipulating optically represented data for useful purposes.

### Summary of the invention

It is therefore an object of the present invention to provide a transition unit which is more effective and which at least alleviates the above discussed problems of the prior art.

This object is achieved with a transition unit according to the appended claims. The invention also relates to some preferred applications of such a transition unit.

According to a first aspect of the invention, a transition unit is provided, comprising a chip with an integrated array of cells, wherein each cell comprises:
at least one electrical or optical input for receiving a first signal;
at least one processing means for processing of the received signal; and
an optical output for outputting the processed, second signal as an optical signal.

With the transition unit according to the invention, the functions of receiving optic or electric input, processing the received signals and supplying them to an optical output, could all be provided within the same chip. Hereby, a truly parallel processing becomes possible, with a very high throughput. The transition unit also becomes very small and compact. Further, it is very stable and reliable, since data need not be transferred between different units.

Further, the transition unit according to the invention is flexible, and could easily be incorporated in many different system structures. It also makes it possible to use a correct and controllable addressing of the optical output.

According to an embodiment, the inputs in at least some of the cells are optical inputs for receiving optical first signals. Hereby, the transition unit provides parallel processing of optical input signals, e.g. received by photo-sensitive devices, such as photo-cells.

According to another embodiment, the inputs in at least some of the cells are electrical inputs for receiving electrical first signals. Hereby, the transition unit provides a very efficient and fast electro-optical transition.

Further, the optical output preferably comprises a light modulator, such as a spatial light modulator (SLM).

According to another embodiment, the optical output comprises an emitting output.

Still further, the processing means that at least one of the cells is adapted to process the signal in dependence on at least one second input signal, and most preferably comprises a cellular neural network (CNN). With the transition unit according to the invention the parallel operation of the CNN could be efficiently used. Further, the CNN technology provides a very compact and powerful processing means. Several such transition units may also be interconnected.

According to further aspects of the invention, it also relates to an optical storage device, an image receiving device, a camera for image registration and an optical computer, all comprising a transition unit as discussed above.

Further scope of the applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### Brief description of the drawings

For exemplifying purposes, the invention will be described in closer detail in the following with reference to embodiments thereof illustrated in the attached drawings, wherein:
Fig 1 is an example of a transition unit according to an embodiment of the invention, wherein fig 1A is a top view of the transition unit and fig 1B is a side view in cross-section of the transition unit;
Fig 2 is a schematic illustration of the function of a transition unit according to an embodiment of the invention;
Fig 3 is a schematic example of a processing means to be used in a transition unit according to an embodiment of the invention;
Fig 4 is an example of an optical storage device according to an embodiment of the invention;
Fig 5 is a schematic illustration of an optical memory device using a transmissive transition unit;
Fig 6 is a schematic illustration of an optical memory device using a reflective transition unit;
Fig 7 is a schematic illustration of the function of an optical memory device according to an embodiment of the invention;
Fig 8 is an example of a registration device to be used as a camera according to an embodiment of the invention;
Fig 9 is an example of a registration device to be used as a display according to another embodiment of the invention;
Fig 10 is an example of a processing means comprising several transition units connected in series after each other, and thus forming an optical computer;
Fig 11 is another example of a processing means comprising several transition units connected in cascade beside each other
Fig 12 is still another embodiment of an optical computer according to the invention.

### Description of preferred embodiments

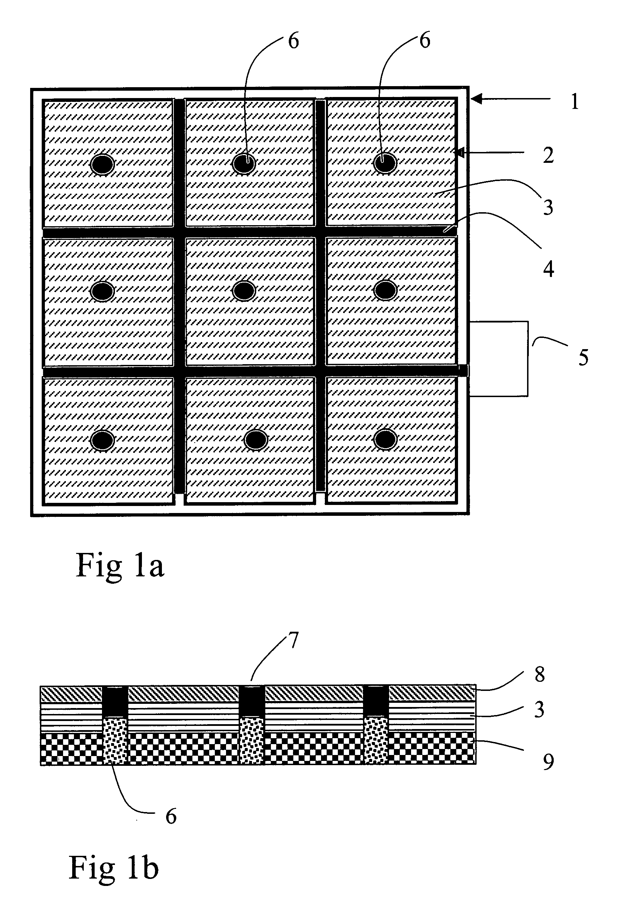

Referring to fig 1, a transition unit according to an embodiment of the invention comprises a chip 1, preferably a chip with several layers arranged in a sandwich structure, and with an integrated array of cells 2. The cells could be arranged in a rectangular matrix form, but other arrangements are feasible as well.

Each cell comprises an input for receiving a first signal, processing means for cell independent processing of the received signal and an optical output for outputting the processed, second signal as an optical signal. The input may be an optical input 3, such as a photocell. A filter layer 8 may be arranged above the photo-sensitive surface, allowing only certain frequencies or a certain frequency range to be transmitted. Hereby, the transition unit becomes more robust and less sensitive for stray-light and other disturbances in the environment. The filter 8 may also be arranged to reduce the input signals for certain parts or areas of the cells or the transition unit.

However, the input may alternatively or additionally be an electrical input, to which electrical signals are provided by means of an electrical connection 4, such as a communication bus. The electrical or optical signals may be provided and supplied by a control unit 5, such as a microprocessor or the like. In such an embodiment, the cells may be electronically programmable. In a preferred embodiment, the cells are provided with several inputs, such as several optical inputs or several electrical inputs, or a combination of one or several electrical inputs and one or several optical inputs.

The optical output is preferably a light modulator 6, i.e. a device for controlled alteration of the reflective or transmissive light properties. Accordingly, one or several of the following properties could be controllably altered: light intensity, phase angle, wavelength and polarization. Preferably, a spatial light modulator (SLM) is used. In case a transmissive light modulator is used, the chip could be provided with corresponding perforations 7 in order to allow light transmission through the chip. However, the chip may alternatively be of a translucent or transparent material. In case a reflective light modulator is used the modulator may comprise a transformable reflecting area.

The light modulator may be illuminated by a laser or the like, to provide a controlled and evenly distributed illumination.

Other types of optical outputs are feasible as well, such as micro mechanical (MEM) displays such as digital micro mirror devices (DMD); diffractive devices such as grating light valve devices (GLV); phase modulating devices such as liquid crystal cells (LC); light emitting devices such as light emitting diodes (LED or OLED) or field emitting devices (FED).

The optical output may be digital, with two different output states for each pixel, or may comprise several different possible values for each pixel, or even be analog.

Further, each cell comprises one or several processing means for processing of the signal provided at the input before supplying the processed signal to the optical output. The processing means is preferably implemented in a semiconductor layer 9 of the chip, such as a silicon substrate. Each processing means is further preferably connected to at least one input.

The processing of the signal may comprise a conversion from a first signal format to a second signal format. However, it may alternatively or additionally comprise a conversion of the signal based on predetermined conditions or based on a second signal supplied to the cell. The second signal may be supplied by one or several other cells in the transition unit, either adjacent, neighboring cells or more distant cells.

One or several of the cells may also comprise memory means for storing previous signal values or the like. Hereby, a second signal may also be supplied by the memory means.

In a preferred embodiment, the processing means comprises a cellular neural network (CNN), with connections between adjacent cells (nearest neighbors) as well as more distant cells (outer neighbors). For example, a CNN structure such as disclosed in US 5140670 or US 5355528 may be used, those documents hereby incorporated by reference.

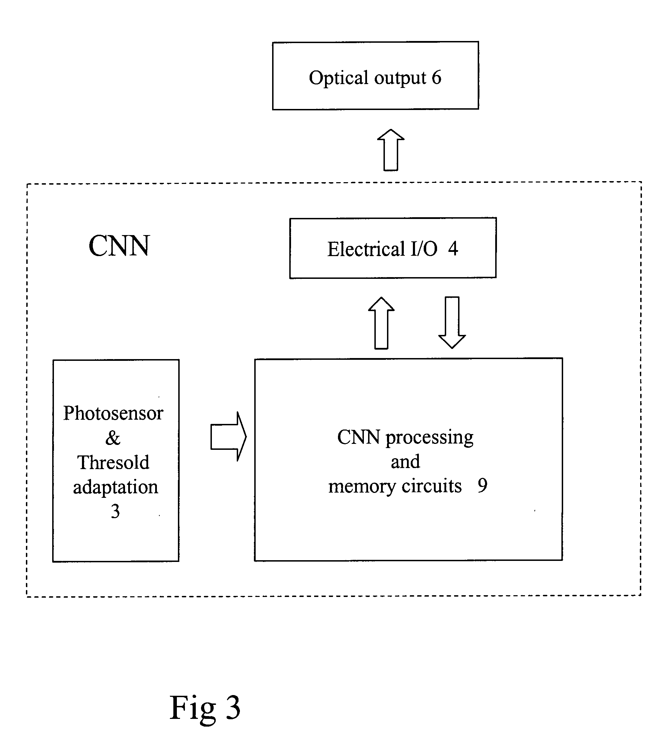

In case a CNN structure is used, the processing means in each cell may have the structure illustrated schematically in fig 3. Such a CNN cell structure is per se previously known, and is e.g. described in "0.8 Micrometer CMOS 2-dimensional Programmable Mixed Signal Focal Plane Array Processor with On-chip Imaging and Instruction Storage", IEEE Journal of Solid State Circuits, Vol. 32, p. 1013.

The cells in the transition unit may be different, e.g. by performing different signal processing. However, in a preferred embodiment, the cells are essentially identical.

The processing may comprise amplification of whole or part of the input signal, combination of different input signals, calculations depending on the input signals etc.

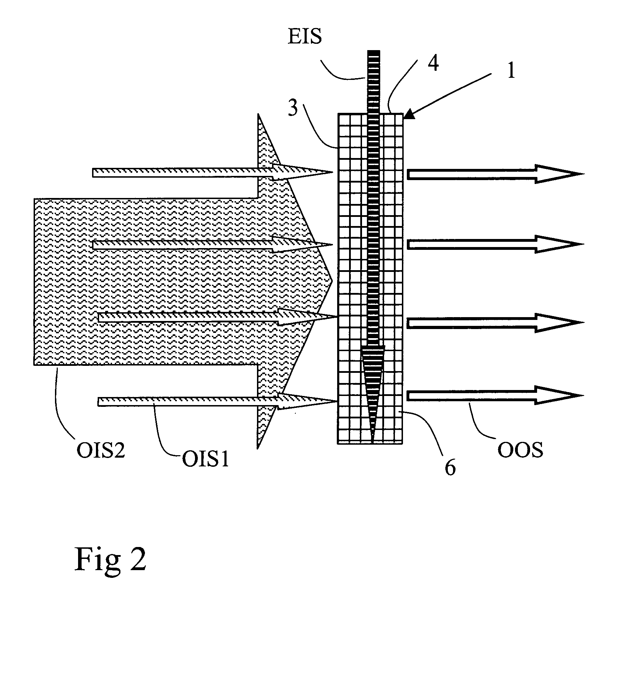

Referring now to fig 2, the function of a transition unit as described above should now be described schematically. The transition unit 1 could comprise an electrical input 4 for receiving an electrical input signal EIS containing data to be used in the processing in each cell. Alternatively, or in addition to the electrical input 4, it may comprise an optical input 3, for receiving electromagnetic (optical) input signal OIS1, such as laser light, containing data to be used in the processing in each cell. Further, in case the transition unit does not comprise an emitting optical output 6, it is further illuminated by a second electromagnetic (optical) input signal OIS2. This second signal may be laser light of one or several wavelengths, white light, or any other type of suitable illumination. The illumination light is thereafter output as the processed optical output signal OOS at the optical output of the transition unit.

Further, the second electromagnetic signal OIS2 may also comprise information, such as representing an image, whereby the image is modified during the processing in the transition unit.

### Examples of possible applications of the transition unit

A transition unit as described above could be used in many different applications. For example, it could be used for optical storage, for optical computers, and as a display e.g. for direct view or to be used in a camera.

The transition unit as described above could be used in an optical storage device. Such an optical storage generally comprises an input device and optical memory means, wherein the input device comprises a transition unit as discussed above.

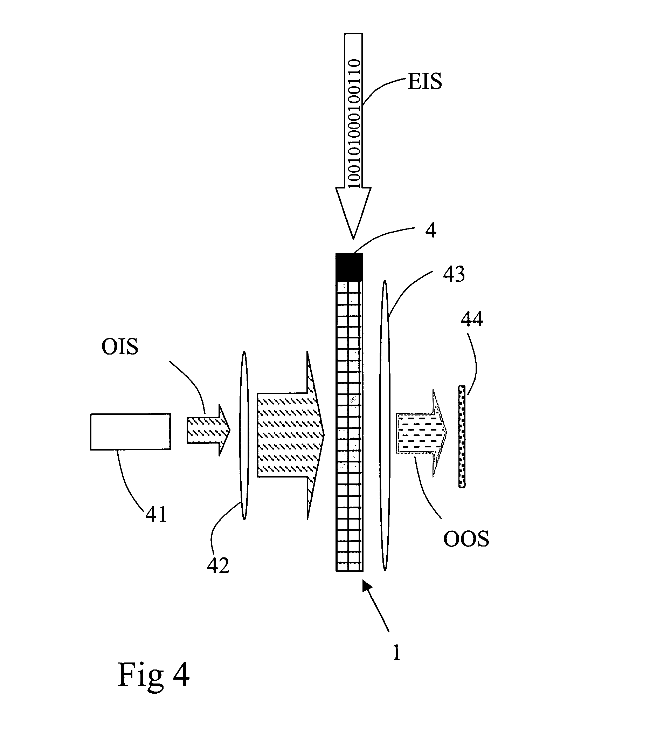

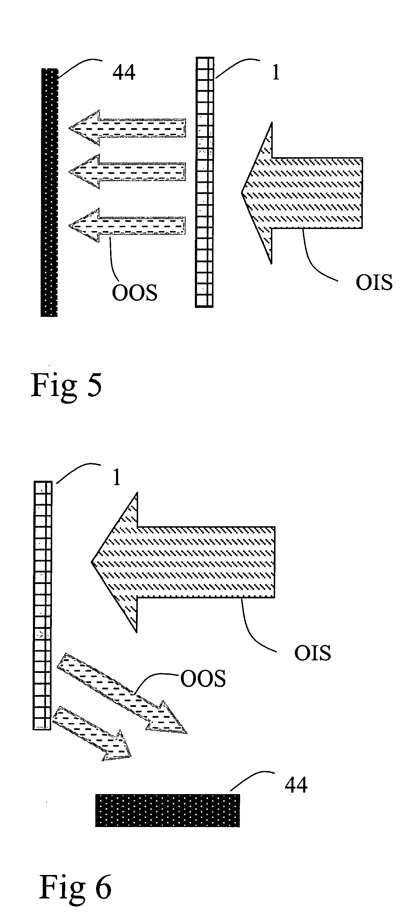

More specifically, an embodiment of the optical storage device comprises a transmissive transition unit 1, as illustrated in fig 4. The chip is provided with an electrical input 4, into which a bit data stream EIS of data to be stored is supplied, said data being addressed to individual cells of the transition unit. Further, the transition unit is illuminated by a light source 41, such as a laser, providing a light signal OIS being evenly distributed on the transition unit by means of a lens 42. The light signal is processed in the transition unit by means of the input data, and the resulting output light signal OOS is focused on the optical memory means 44 by means of a second lens 43. The optical memory means may be a photo-sensitive material, such as photographic film or emulsion, a holographic memory or the like. The transition unit may be either transmissive, as is illustrated in fig 5, or reflective, as is illustrated in fig 6. Further, the input data may be provided by either electrical signals or optical signals, or even a combination of the two, as is discussed in the previous.

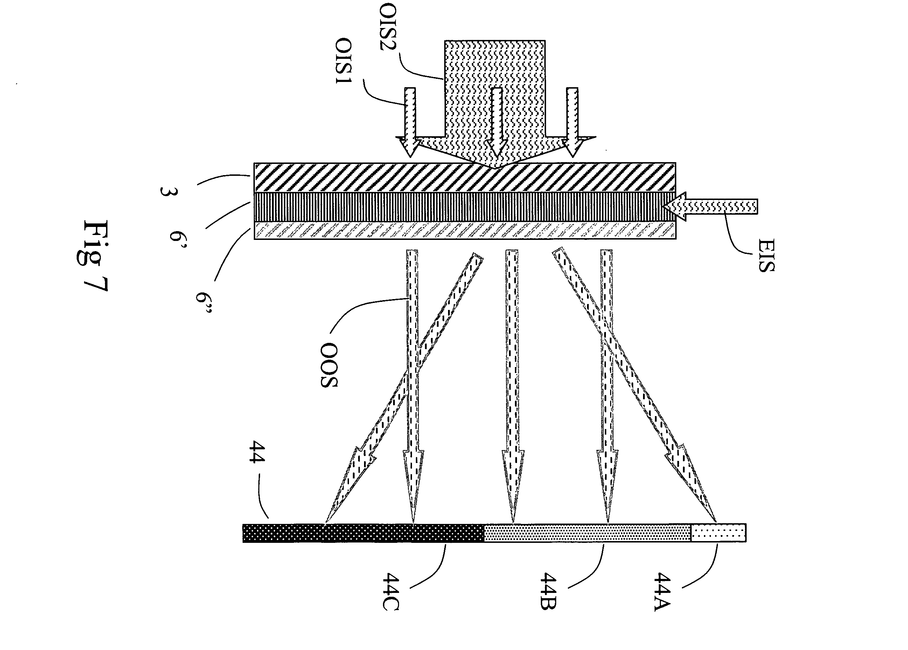

The optical input signals (OIS1) or electrical input signals (EIS) may also be used to control the output direction of the optical output signal (OOS), i.e. the deflection of the OOS. This is illustrated schematically in fig 7. In this embodiment, the transition unit comprises at least two different modifying output layers; one layer 6' for modification of the phase, polarization or the like, and one layer 6" for modification of the output deflection. Accordingly, the deflection could be controlled independently for different cells according to input data. Hereby, the output signals could e.g. be directed towards different areas 44A, 44B, 44C on the optical memory 44, whereby an active and controllable addressing is achieved.

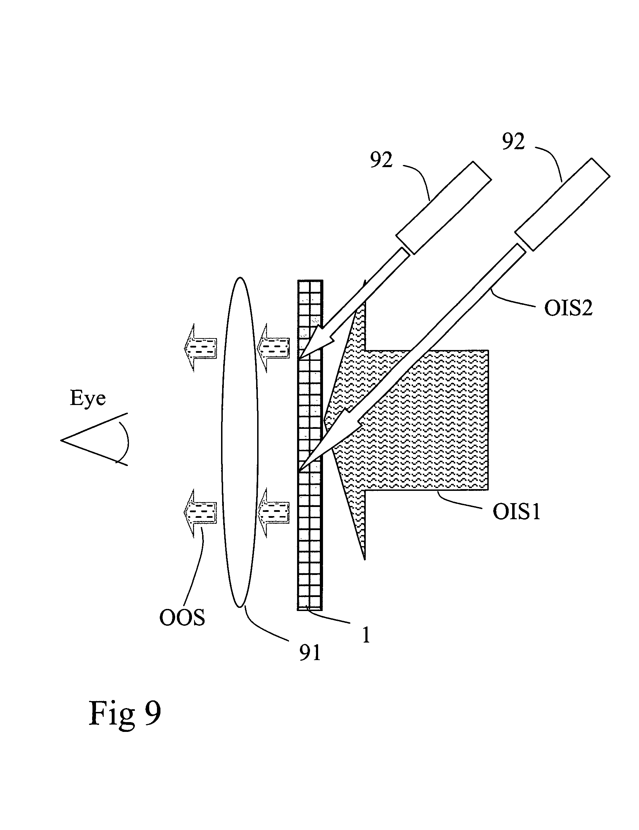

Further, the transition unit may be combined with optics for direct registration of an image. This could be used for direct display and real-time analysis of the image, e.g. for air reconnaissance purposes. To this end, the chip as described above could be used as a microdisplay, a so-called cellular processor display (CDP) or image transistor, as is illustrated in fig 9. Hereby, an image OIS1 of a first format is supplied to the input of the transition unit 1 and processed, where after an image of a second format OOS is displayed on the optical output. The transition unit may further be provided with a second optical input signal OIS2, as discussed in the foregoing, provided by a light source 92. The image processing may comprise filtering of different colors and wavelengths. For example, it may be used to distinguish IR wavelengths, and to translate them into a visible wavelength range. The image processing may also comprise contrast enhancement, increase or decrease of dynamical variations, accentuation or hiding of features or objects with different properties, such as moving objects, objects of certain dimensions etc.

The optical output signals may be viewed directly or through a magnifying lens 91, to be used as a display. Such a display may be arranged in spectacles, visors, a camera finder, in a panel to be arranged on different equipment, such as cars or the like, etc.

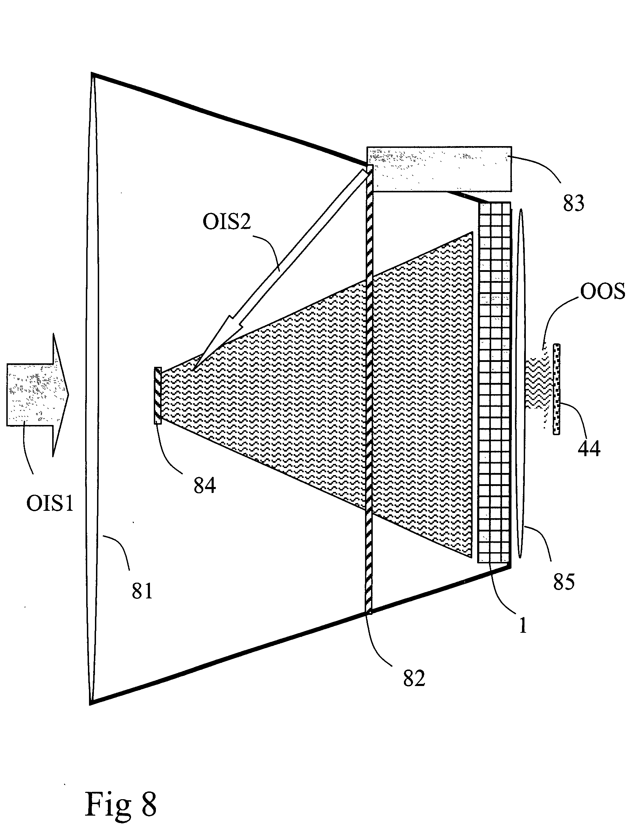

However, it may also be used together with optical storage means 44, to function as a camera, to enable storage of received images, as is shown in fig 8. By means of the transition unit 1 the image may be preprocessed before storage, whereby the image quality could be improved. The image signal OIS1 is hereby entered into the camera and projected onto the transition unit 1 through a lens 81. The image may however be preprocessed in a frequency filter 82 or the like. Further, a second optical input signal OIS2 is directed towards the transition unit 1 by means of a light source 83 and a reflecting mirror 84. After the transition unit, the optical output signal OOS, comprising the processed image, is projected onto the memory means 44 by means of a lens 85. The processing of the image may be of the types discussed above. However, the processed image may also be used for real-time processing to distinguish certain features in the image or be displayed on a display unit.

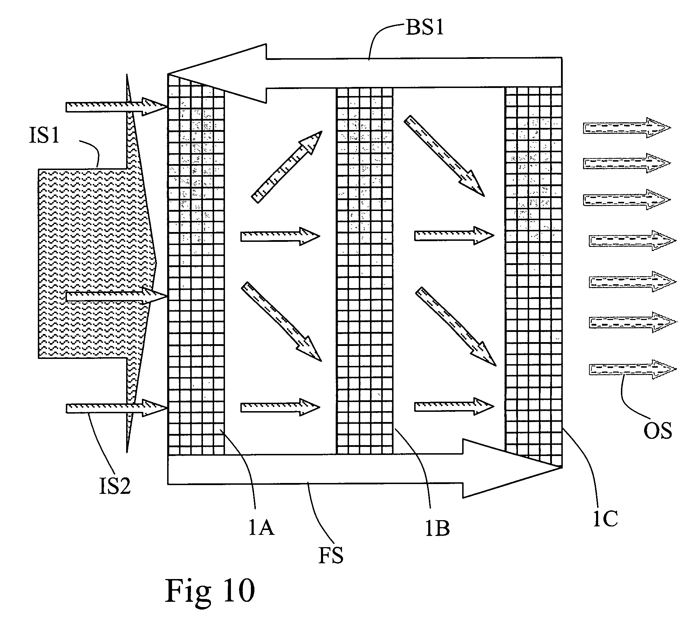

Still further, the transition unit may also be used in an optical computer for parallel data processing. Two, three or more transition units may also be interconnected. Such an optical computer is illustrated schematically in fig 10. In this optical computer, three transmissive transition units 1A, 1B and 1C are arranged in series. Input data is supplied to the computer, as and/or electrical or optical input signal 1, and further processing and control signals are preferably supplied as a electrical and/or optical second input signal IS2. Thereafter, the signals are transferred in parallel between the transition units, whereby several processing steps may be consecutively executed. For example, the first transition unit may perform a loading and assorting operation, the second a calculation operation and the third a translation operation. One or several of the transition units may also direct the output signals to different parts of the next transition unit, as is discussed above. The optical signals may hereby also be returned in an opposite direction and follow a path comprising one or several loops between the transition units. Accordingly, electrical and/or optical signals may be sent in a controlled manner both in the forward direction, FS, and the backward direction, BS. The processed signal OS is then output from the computer as an electrical or optical signal.

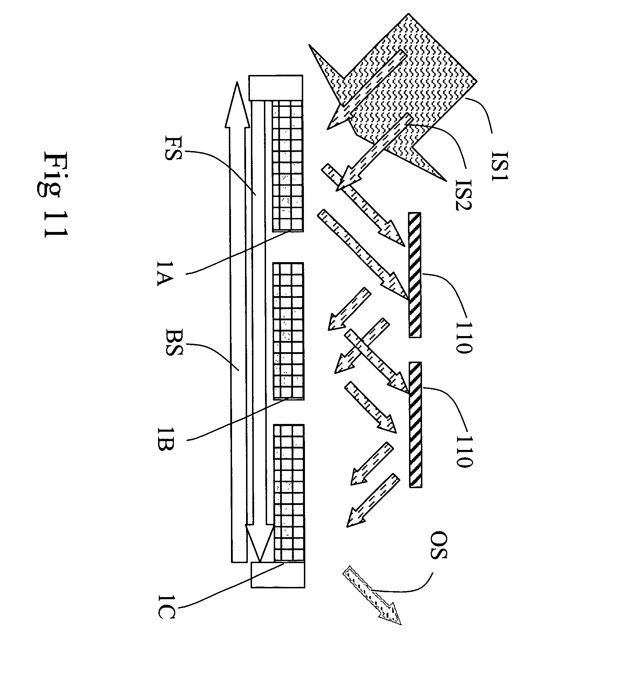

Reflective translation units may also be used in a similar manner, as is illustrated schematically in fig 11. In this case, reflecting surfaces such as mirrors 110 are arranged to provide an optical path between the transition units.

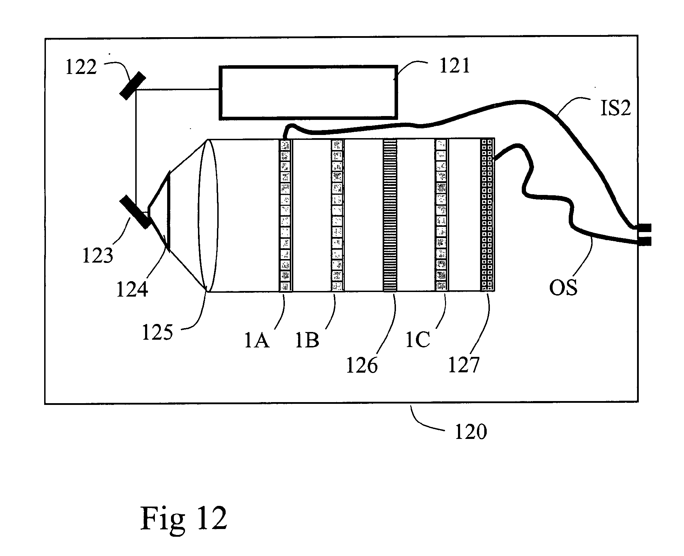

According to another embodiment, an optical computer 120 according to the invention may comprise additional elements, as is illustrated in fig 12. In this embodiment, the computer comprises a light source 121, such as a laser, with an optical path defined by e.g. two reflecting mirrors 122, 123, a beam expander 124 and a focussing lens 125, forming parallel beams. The beams are projected onto a first transition unit 1A, provided with an additional electrical or optical input to be supplied with an additional input signal IS2. Thereafter, the signals are processed in one or preferably several transition units, as described previously. In the discussed example, three transition units 1A-1C are used. It is also possible to let the transition units periodically be in a transparent state, whereby the light is directly forwarded to the next transition unit without being processed. Hereby, the incoming light may be processed in a specific transition unit, or be forwarded directly to another transition unit in a controllable fashion. Thus, in case e.g. pulsed light is used, the pulses may be used sequentially by different units in the computer. Hereby, the data loading and processing time of different units do not restrict the processing time of the computer.

Further, the computer may be provided with one or several optical memories 126. Such memories may also be in a transparent state, or comprise transparent areas, whereby the memories may be used controllably. The output signal from the computer may be an optical signal. However, it is also conceivable to use a optical-to-electrical transition unit 127, such as a CNN chip, to form an electrical output signal OS.

With an optical computer according to the above, a very fast and massively parallel data processing could be achieved. This is very useful for a variety of fields, e.g. the field of image processing.

The invention has now been described by way of example. However, it should be apparent for any one versed in the art that several modifications and alternatives are possible. For example, all different aspects and features of the invention described in relation to the different embodiments are interchangeable if nothing else is specifically stated, and could be used in all the other embodiments as well. Further, different input and output means could be used, as discussed above, as well as different processing means. Still further, the transition unit may be used in many different contexts and applications, and not only the ones mentioned in the application. Such obvious modifications must be considered to be within the scope of the invention, as it is defined by the appended claims.

## Claims

1. A transition unit comprising a chip with an integrated array of cells, wherein each cell comprises:
at least one input for receiving a first signal;
at least one processing means for processing of the received signal; and
an optical output for outputting the processed, second signal as an optical signal.

2. A transition unit according to claim 1, wherein the inputs in at least some of the cells are optical inputs for receiving optical first signals.

3. A transition unit according to claim 2, wherein the optical inputs comprises photo-sensitive units, and preferably photo-cells.

4. A transition unit according to claim 1, wherein the inputs in at least some of the cells are electrical inputs for receiving electrical first signals.

5. A transition unit according to any one of the preceding claims, wherein the optical output comprises a light modulator, such as a spatial light modulator (SLM).

6. A transition unit according to claim 5, wherein the light modulator is reflective.

7. A transition unit according to claim 5, wherein the light modulator is transmissive.

8. A transition unit according to any one of the claims 1-4, wherein the optical output comprises a light emitting device.

9. A transition unit according to any one of the preceding claims, wherein the processing means in at least one of the cells is adapted to process the signal in dependence on at least one second input signal.

10. A transition unit according to claim 9, wherein the second signal is supplied from at least one of the other cells on the chip.

11. A transition unit according to claim 10, wherein the second signal is supplied from at least one of the neighboring cells on the chip.

12. A transition unit according to claim 9, 10 or 11, wherein at least some of the cells further are comprising memory means for storing a previous signal value, said second input signal being supplied by the memory means.

13. A transition unit according to any one of the preceding claims, wherein the processing means comprises a cellular neural network (CNN).

14. A transition unit according to any one of the preceding claims, wherein the cells are essentially identical.

15. An optical storage device, comprising an input device and optical memory means, wherein the input device comprises a transition unit according to any one of the preceding claims.

16. An optical storage device according to claim 15, wherein the optical memory means comprises a holographic memory.

17. An optical storage device according to claim 15, wherein the optical memory means comprises a photosensitive material, such as a photographic film or emulsion.

18. An image receiving device comprising an image receiving optics and image processing means, said image processing means comprising a transition unit according to any one of the claims 1-14.

19. A camera for image registration, comprising an image receiving optics, image processing means and an optical storage means, said image processing means comprising a transition unit according to any one of the claims 1-14.

20. An optical computer comprising at least one transition unit according to any one of the claims 1-14, and preferably at least two transition units.

21. An optical computer according to claim 20, further comprising at least one optical memory means.

22. An optical computer according to claim 20 or 21, further comprising an optical-to-electrical transition unit.
